# FASCICULE DE BREVET EUROPEEN

(11) **EP 0 615 683 B1**
(45) Date de publication et mention de la délivrance du brevet: **11.06.1997**
(21) Numéro de dépôt: 94400523.0
(22) Date de dépôt: 10.03.1994
(51) Int. Cl.: A01G 31/00, A01G 31/02

(54) **Procédé de production par semi-flottant de plants d'espèces végétales, notamment destinées au repiquage comme par exemple des nicotianées**
Verfahren zur Herstellung von Pflanzen mittels Schwimmsystem, insbesondere zum Pikieren, zum Beispiel von Pflanzen der Gattung Nicotiana
Method for producing plants with the flotation system, particularly for transplanting for example plants of the genus Nicotiana

(30) Priorité: 18.03.1993 FR 9303132
(43) Date de publication de la demande: 21.09.1994
(73) Titulaire: SOCIETE NATIONALE D'EXPLOITATION INDUSTRIELLE DES TABACS ET ALLUMETTES, 75340 Paris Cedex 07 (FR)
(72) Inventeur: Tancogne, Jacques, F-24100 Bergerac (FR)
(74) Mandataire: Bloch, Gérard

(56) Documents cités:
- EP-A- 0 494 820
- FR-A- 2 327 311
- DATABASE WPI Week 8416, 3 Octobre 1984 Derwent Publications Ltd., London, GB; AN 84-097829 & JP-A-59 043 176 (TORAY IND INC)

## Description

La présente invention concerne le procédé de production de plants d'espèces végétales notamment destinées au repiquage comme par exemple des nicotianées (tabac, tomate, piment, aubergine, pétunia etc...) par "semi flottant", c'est-à-dire dans lequel les substrats de culture contenant les graines ou les plantules sont placés sur un plateau qui flotte sur la solution nutritive contenue dans un bac dont le niveau est maintenu constant. Un tel procédé a été décrit dans le brevet français 91 00227 dans lequel il est prévu que l'eau du bac contient initialement la quantité totale de matière nutritive nécessaire au développement de la plante jusqu'à sa transplantation, le niveau de liquide dans le bac étant maintenu constant par apport d'eau uniquement.

Dans les systèmes de production par semi flottant, le plant émet très rapidement un système racinaire important qui se développe dans le bac de solution nutritive à partir de laquelle il assure son alimentation.

Dans ces systèmes, les racines s'alimentent, en majeure partie, directement dans la réserve de solution dès qu'elles commencent à l'atteindre (environ 8 à 10 jours après la levée), les écarts dans ce délai entraînent une irrégularité de l'alimentation et de la croissance et cela nuit à l'homogénéité des transplants au moment du repiquage et au potentiel de reprise des plants, tout en obligeant à supprimer les racines extérieures à la motte avant le repiquage en plein champ.

L'invention vise à supprimer les inconvénients ci-dessus et améliorer la production par flottation et la qualité des plants obtenus.

Elle prévoit, à cet effet, d'ajouter à la solution nutritive c'est-à-dire au volume d'eau et d'éléments nutritifs contenus dans le bac de flottage du bromure de lauryl dimethyl benzylammonium (BLDB) à une concentration supérieure à 0,01 % en poids, de préférence supérieure à 0,04 %.

L'additif proposé empêche le développement des racines dans la solution nutritive, les racines se développant uniquement dans la motte tant que la substance active n'est pas dégradée. L'alimentation des plants (en particulier azotée) se fait à partir de la solution qui imbibe l'intérieur de la motte et qui se renouvelle au fur et à mesure de l'évapotranspiration de l'eau.

Il en résulte les avantages suivants :
. Alimentation et croissance plus régulières, donnant une meilleure homogénéité des transplants au moment du repiquage.
. Motte plus "cohésive" grâce à un poids et une densité de racines plus élevés, ce qui augmente aussi le potentiel de reprise des plants.
. Vieillissement et dépérissement du transplant moins rapide pendant la période de conservation car les dernières traces d'azote en fin d'élevage s'épuisent très lentement en raison de l'absence quasi totale de racines se développant directement dans la solution nutritive.
. Pas de racines extérieures à supprimer avant le repiquage en plein champ.

En outre, à une concentration supérieure à 0,05 %, le BLDB inhibe le développement des algues dans la solution.

Les effets de l'additif selon l'invention apparaissent nettement dans les expériences décrite ci-dessous, qui ont été faites avec une solution nutritive ayant la composition suivante :

| Eléments principaux | |
|---|---|
| nitrate d'ammonium | 40 mg/l |
| nitrate de potassium | 606,66 mg/l |
| sulfate de potassium | 174,25 mg/l |
| chlorure de potassium | 37,25 mg/l |
| sodium dihydrogénophosphate à 2 molécules d'eau | 390,03 mg/l |

| Oligo-éléments | |
|---|---|
| acide borique | 3 mg/l |
| sulfate manganèse | 3 mg/l |
| sulfate zinc | 1 mg/l |
| sulfate cuivre | 0,5 mg/l |
| Fe EDTA (acide éthylènedinitrilo tétra-acétique sel de sodium-fer III-3H20) | 10 mg/l |
| heptamolybdate d'ammoniumtétrahydraté | 9,2 mg/l |

### Expérience I

Des plants ont été produits avec cette solution nutritive à laquelle a été ajouté 0,006 % à 0,08 % de bromure de lauryl diméthyl benzylammonium (BLDB).

Des plants de tabac de la variété dite ITB 30 ont été semés en terrine et repiqués à la levée, sur des plateaux flottants comportant des alvéoles de 22 ml remplies d'un terreau de tourbe alcalinisée avec de la dolomie. Les observations ont été effectuées après 40 jours d'élevage. Les resultats ont été les suivants, Te marquant les plants produits par culture par semi-flottants dans les mêmes conditions, mais sans BLDB.

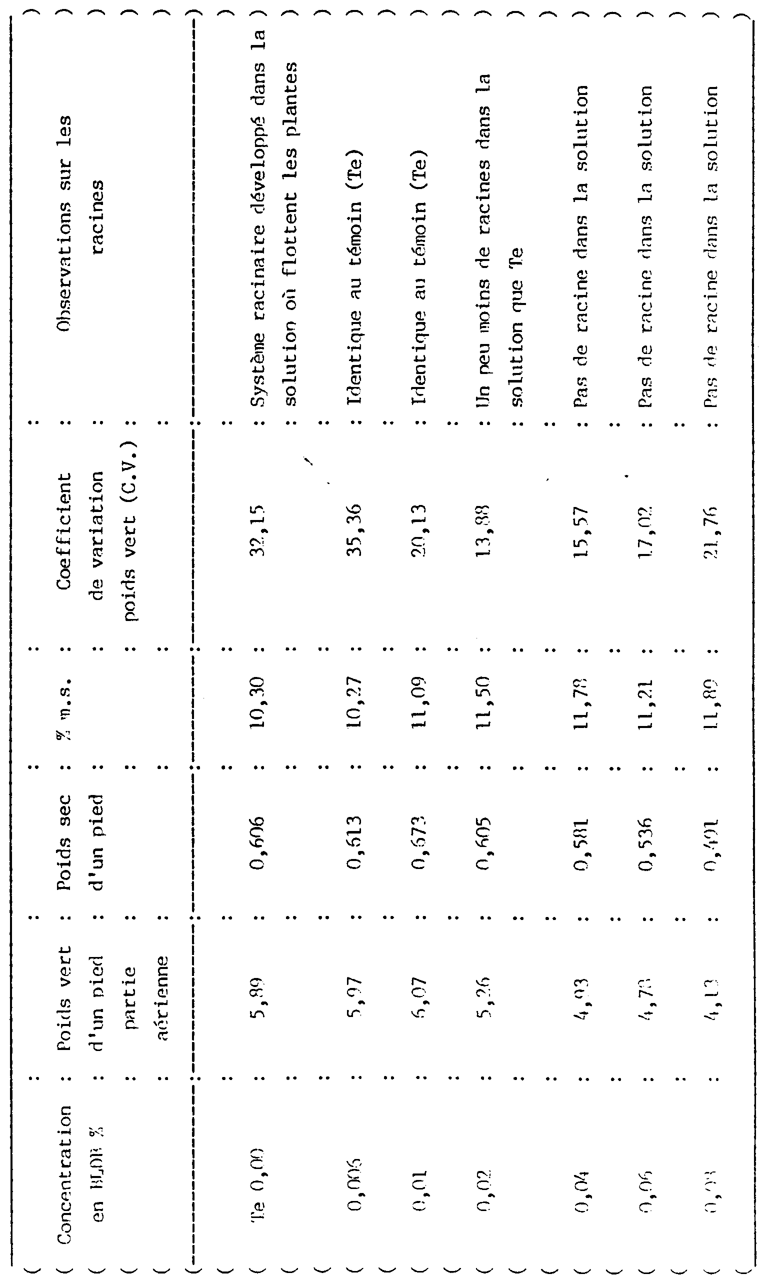

L'effet du BLDB sur les racines est net et équivalent pour les concentrations en m.a. de 0,04 ; 0,06 ; 0,08. On peut remarquer la meilleure régularité des plants (cv plus faible) avec le BLDB, à partir de 0,01 %, même en l'absence d'effet apparent sur les racines, au moins au moment de l'arrachage.

### Expérience II

Dans une autre expérience comportant 10 plateaux flottants de 20 plants (5 Te, 5 avec BLDB), dans des bacs individuels de solution nutritive de concentration identique en éléments nutritifs (6 meq/l d'azote), on a trouvé que le pourcentage de racines dans la motte, par rapport au poids total du plan produit, est beaucoup plus élevé lorsque le BLDB est utilisé dans la solution nutritive. Ce pourcentage est presque doublé (+ 80 %) lorsqu'on l'exprime en poids frais. Lorsque l'on utilise la solution nutritive sans additif, la masse des racines (poids frais) se répartit pour moitié dans la solution et pour moitié dans la minimotte, avec le BLDB les racines restent pratiquement toutes dans la minimotte, mais le rapport poids frais de racines sur poids total du plant reste le même. (cf. Tableaux 1 et 2 ci-après).

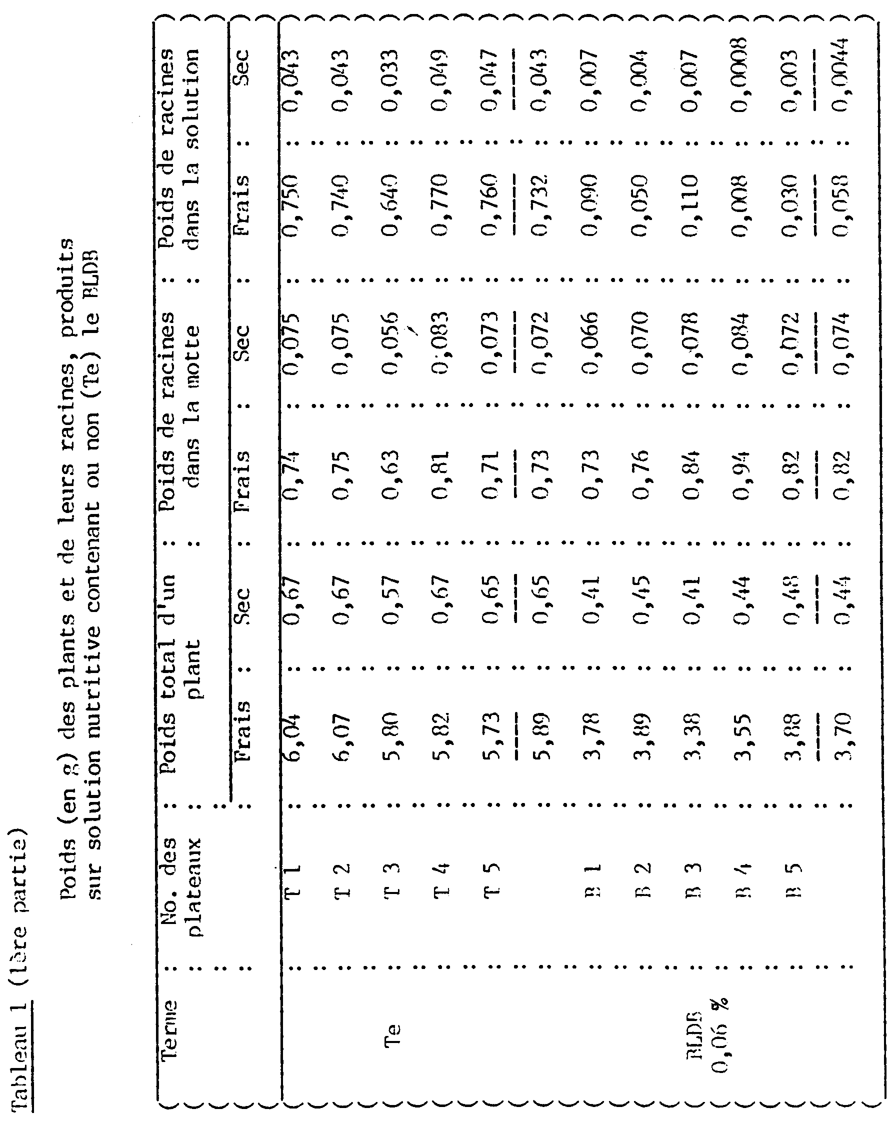

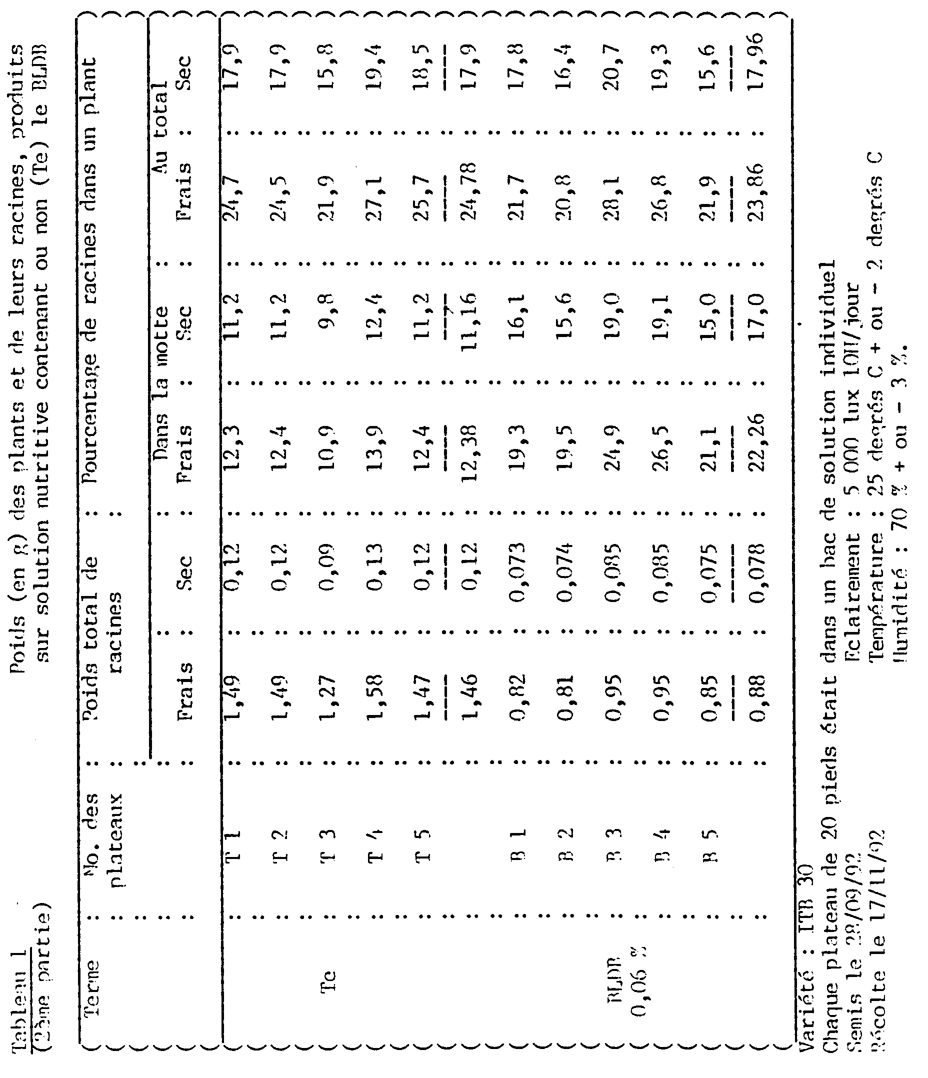

**Tableau 2**

| **HOMOGENEITE DES PLANTS** | | | |
|---|---|---|---|
| Terme | No. des plateaux | Ecart-type | Coefficient de variation |
| Te | T1 | 2,10 | 46,4 |
| | T2 | 2,06 | 45,0 |
| | T3 | 1,35 | 29,8 |
| | T4 | 1,87 | 44,1 |
| | T5 | 1,54 | 36,1 |
| | | ---- | ---- |
| | | 1,78 | 40,3 |
| BLDB 0,06 % | B1 | 0,52 | 17,6 |
| | B2 | 0,70 | 22,7 |
| | B3 | 0,61 | 25,1 |
| | B4 | 0,53 | 20,2 |
| | B5 | 0,71 | 23,5 |
| | | ---- | ---- |
| | | 0,61 | 21,8 |

### Pourcentage de racines par rapport au poids total d'un pied

| | Poids frais | | Poids secs | |
|---|---|---|---|---|
| | Dans la motte | Au total | Dans la motte | Au total |
| Te | 12,4 | 24,8 | 11,2 | 17,9 |
| BLDB 0,06 % | 22,3 | 23,9 | 17,0 | 18,0 |

Avec le BLDB le plant repiqué comporte donc (dans la motte) un pourcentage de racine beaucoup plus élevé que le plant produit avec une solution nutritive sans additif.

Dans cette même expérience les coefficients de variations calculés sur les poids frais de la partie aérienne, montrent que l'homogénéité des plants est meilleurs lorsque l'on utilise le BLDB.

| | Ecart type | Coefficient de variation |
|---|---|---|
| Te | 1,78 | 40,3 |
| BLDB 0,06 % | 0,61 | 21,8 |

### Expérience III

La solution avec additif a été utilisée pour produire des plants de différentes espèces végétales. La solution BLDB à 0,06 % et 7 meq/l d'azote a été comparée à l'ancienne solution (5 meq/l d'azote) utilisée comme témoin (Te). Les résultats moyens de 11 espèces de solanées récoltées, après 4 à 5 semaines de croissance, sont les suivants :

| Solutions | Poids (g) frais (tige+feuilles) d'un pied | Poids (g) sec (tige+feuilles) d'un pied | M.S. % | Ecart type (poids frais) | Coefficient de variation (poids frais) |
|---|---|---|---|---|---|
| Témoin (Te) | 3,04 | 0,28 | 9,1 | 1,53 | 54,8 |
| Solution avec BLDB | 2,97 | 0,27 | 9,1 | 0,61 | 21,4 |

Les 11 espèces ou variétés (3 N. Tabacum, 4 autres nicotianées, tomate, piment, aubergine, pétunia) donnent tous des plants de qualité (cf. Tableau 3 ci-après).

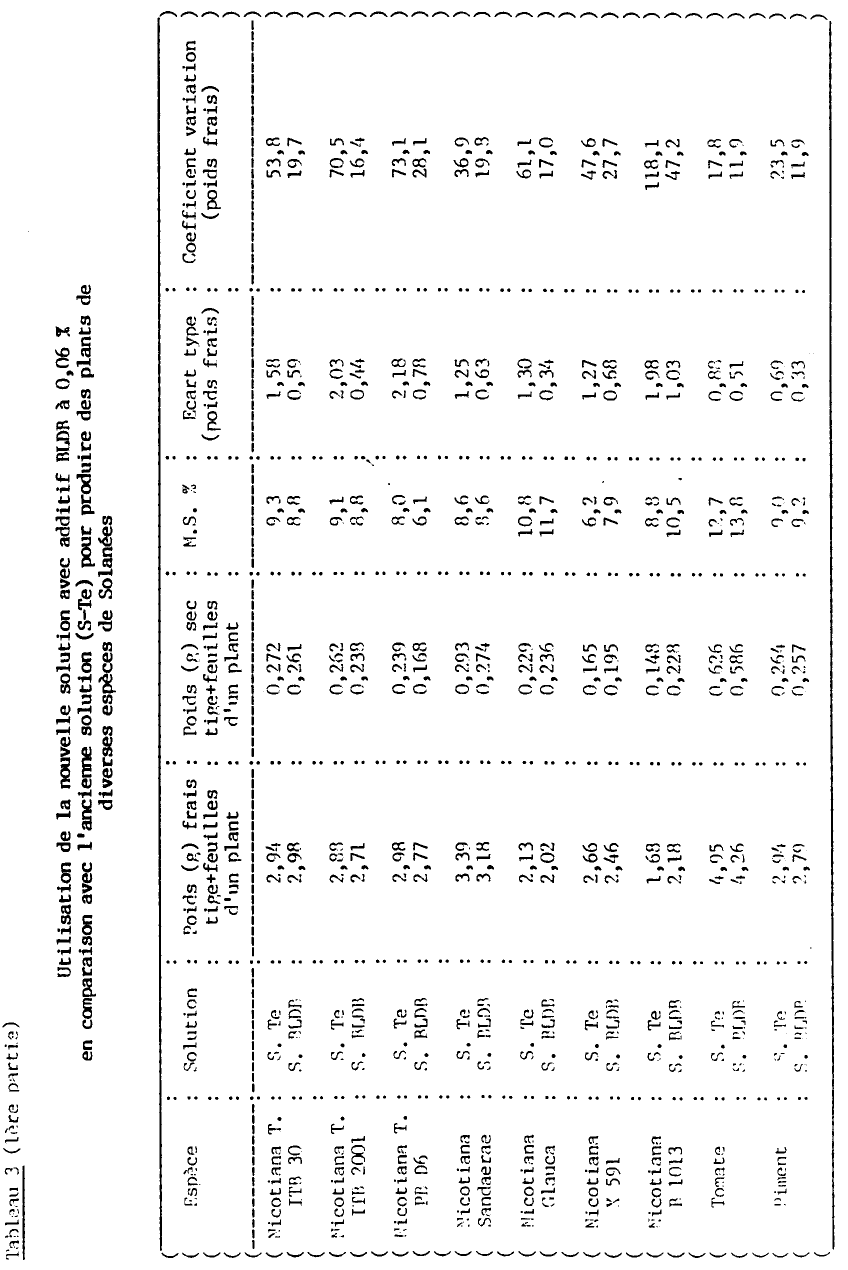

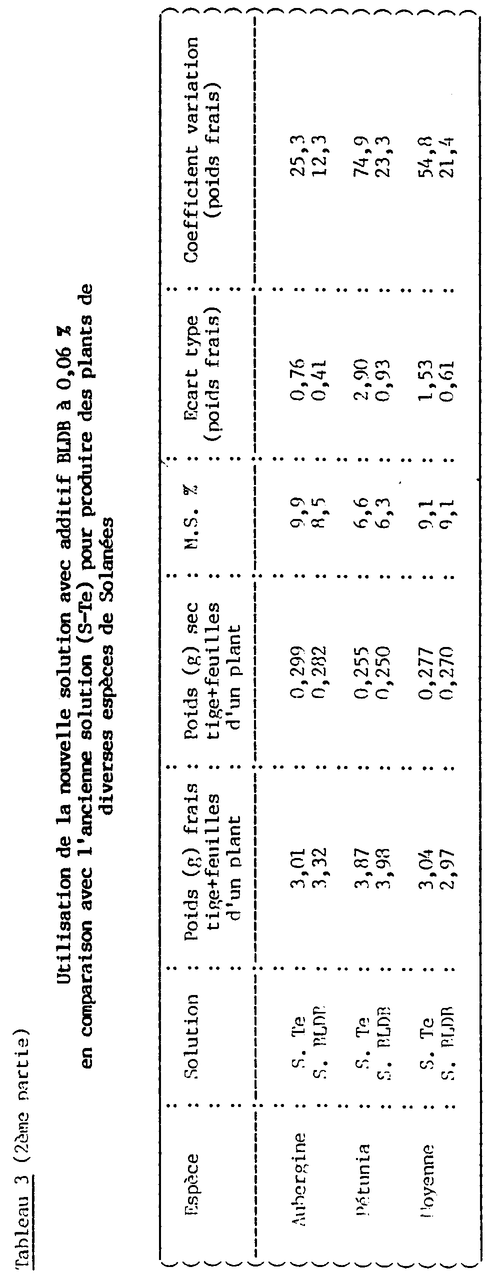

L'addition de 2 meq/l d'azote à la solution avec additif, permet d'obtenir des plants de même poids, dans le même laps de temps.

La solution avec l'additif BLDB améliore fortement l'homogénéité des plants, ce qui se traduit par un abaissement considérable des écarts types et des coefficients de variation calculés à partir des poids frais de la partie aérienne des plants.

Par contre, on a constaté qu'à partir d'une concentration de 0,10 % la croissance des plants était ralentie.

## Revendications

1. Procédé de production de plants d'espèces végétales, notamment destinées au repiquage comme par exemple des nicotianées (tabac, tomate, piment, aubergine, pétunia etc...) par "semi flottant", c'est-à-dire dans lequel les substrats de culture contenant les graines ou les plantules sont placés sur un plateau qui flotte sur la solution nutritive contenue dans un bac dont le niveau est maintenu constant, caractérisé par le fait que l'on ajoute à la solution nutritive du bac du bromure de lauryl dimethyl benzylammonium, bref BLDB à une concentration supérieure à 0,01 % en poids.

2. Procédé selon la revendication 1 dans lequel la concentration en BLDB est comprise entre 0,04 % et 0,1 % en poids.

3. Procédé selon la revendication 2, dans lequel la concentration en BLDB est comprise entre 0,04 et 0,08 %.

## Claims

1. Method for the production of patches of vegetable species, in particular intended for pricking out, such as for example nicotiana (tobacco, tomato, capsicum, aubergine, petunia etc...) by "semi floating", that is to say in which the culture substrates containing the seeds or the plantlets are placed on a tray which floats on the nutrient solution contained in a trough whereof the level is kept constant, characterised by the fact that benzylammonium dimethyl lauryl bromide, abbreviated as - (BDLB) at a concentration greater than 0.01 % by weight is added to the nutrient solution of the trough.

2. Method according to Claim 1 in which the concentration of BDLB is comprised between 0.04 % and 0.1 % by weight.

3. Method according to Claim 2, in which the concentration of BDLB is comprised between 0.04 and 0.08 %.

## Patentansprüche

1. Verfahren zum Erzeugen von insbesondere zum Umpflanzen Setzlingen von Pflanzensorten, wie beispielsweise Nicotiana-Pflanzen (Tabak, Tomate, Piment, Aubergine, Petunie, etc...), durch "Halbschwimmen", d.h. wobei die die Samenkörner oder Keime enthaltenden Kultursubstrate auf einen Träger aufgebracht werden, der auf der Nährlösung schwimmt, die in einer Schale enthalten ist, deren Füllstand konstant gehalten wird,
**dadurch gekennzeichnet,**
daß der Nährlösung der Schale Lauryldimethylbenzylammoniumbromid, kurz LDBB, mit einer Konzentration größer als 0,01 Gewichtsprozent zufügt wird.

2. Verfahren nach Anspruch 1, wobei die Konzentration von LDBB zwischen 0,04 und 0,1 Gewichtsprozent liegt.

3. Verfahren nach Anspruch 2, wobei die Konzentration von LDBB zwischen 0,04 und 0,08 Gewichtsprozent liegt.
